# EUROPÄISCHE PATENTSCHRIFT

(11) **EP 0 686 832 B1**
(45) Veröffentlichungstag und Bekanntmachung des Hinweises auf die Patenterteilung: **03.04.2002**
(21) Anmeldenummer: 95106292.6
(22) Anmeldetag: 27.04.1995
(51) Int. Cl.: G01F 1/66

(54) **Verfahren zur Ultraschall-Messung von Durchflussmengen von strömenden Fluiden**
Method for the ultrasonic measurement of the flowrate of flowing fluids
Procédé pour la mesure par ultrasons du débit des fluides en écoulement

(30) Priorität: 10.06.1994 DE 4420329
(43) Veröffentlichungstag der Anmeldung: 13.12.1995
(73) Patentinhaber: Hydrometer GmbH, D-91522 Ansbach (DE)
(72) Erfinder: Ziegler, Horst, Prof.Dr., D-33100 Paderborn (DE); Behlen, Horst, Dipl.-Ing., D-33100 Paderborn (DE); Gaugler, Ulrich, Dipl.-Ing., D-91522 Ansbach (DE)
(74) Vertreter: Matschkur, Lindner Blaumeier Patent- und Rechtsanwälte

(56) Entgegenhaltungen:
- EP-A- 0 451 356
- EP-A- 0 452 531
- WO-A-85/00653
- US-A- 4 480 485

## Beschreibung

Die Erfindung betrifft ein Verfahren zur Ultraschall-Messung von Durchflußmengen von strömenden Fluiden, bei dem zwei in der Meßstrecke für das strömende Fluid stromauf- und stromabwärts angeordnete kombinierte Sende- und Empfangswandler simultan mit einer mittels eines Generators, vorzugsweise eines Burst-Generators generierten Ultraschallfrequenz beaufschlagt werden und wechselweise analoge, das Fluid in und gegen die Strömungsrichtung durchlaufende Signale empfangen, anhand welcher die Zeitdifferenz zwischen vorbestimmten Pegeln, insbesondere den Nulldurchgängen einer bestimmten Periode jedes Signals zur Berechnung der Durchflußmenge bestimmt wird.

Ein solches Verfahren gehört zum Stand der Technik.

Für die Ultraschall-Durchflußmessung von strömenden Fluiden, so Gase und Flüssigkeiten, werden üblicherweise an beiden Enden der durchströmten Meßstrecke einer vorbestimmten Länge Ultraschallwandler angeordnet und simultan mit einem Ultraschall-Burst von beispielsweise 5 - 100 Perioden der Ultraschallfrequenz, die vorzugsweise im Bereich von 1 MHz liegt, beaufschlagt. Anschließend wird die Zeitdifferenz zwischen vorbestimmten Pegeln einer bestimmten Periode, üblicherweise den Nulldurchgängen, aus dem Ultraschallpaket der wechselweise empfangenen Signale beider Wandler gemessen. Diese Zeitdifferenz ist näherungsweise proportional zur mittleren Fließgeschwindigkeit des Mediums und damit zum Durchfluß. Bei den gewünschten Meßstreckenlängen ist die maximale Zeitverzögerung der durch den Fluß des Mediums beschleunigten oder verzögerten Ultraschallwellen meist geringer als die Periode der Meßfrequenz, sie liegt beispielsweise bei ca. 1/2 Periodendauer, die bei obiger Frequenz umgerechnet 0,5µs (0,5 x 10⁻⁶s) beträgt.

Diese Zeitdifferenz muß nun mit einer relativen Genauigkeit von besser als 2% gemessen werden, da der gewünschte Meßfehler der Durchflußmessung unter 2% des jeweiligen Meßwertes bleiben soll, um akzeptable und den Vorschriften entsprechende Meßdaten zu erhalten. Das bedeutet für das Beispiel bei Maximaldurchfluß einen maximal zulässigen Zeitmeßfehler von 10nsec, der jedoch unproblematisch realisierbar bzw. unterschreitbar ist. Am unteren Meßbereichsrand, der beispielsweise bei 0,5% des Maximaldurchflusses liegen soll, woraus sich dann rechnerisch eine Zeitverzögerung von 2,5ns (2,5 x 10⁻⁹s) ergibt, bedeutet derselbe gewünschte relative Meßfehler von 2% allerdings eine zulässige Zeitunsicherheit von nur noch 50ps (50 x 10⁻¹²s). Bei diesen Anforderungen am unteren Rand des Meßbereichs stellt die Erzeugung der Triggersignale für die nachgeschalteten Meßeinrichtungen aus den empfangenen Signalen ein erhebliches Problem dar, da einerseits Schwellwert-Unterschiede scheinbare Laufzeitunterschiede zur Folge haben und andererseits die Laufzeitunterschiede der jeweiligen Verstärker- und Triggerschaltungen, die jedem Wandler separat zugeordnet sind, bereits bei Durchfluß Null, bei dem die Zeitdifferenz Null wäre, für Zeitunterschiede sorgen und damit eine nicht vorhandenen Durchfluß anzeigen können. Dieser Meßfehler ist außerdem meist abhängig von der Temperatur oder der Temperaturdifferenz der Bauelemente der separaten Meß- und Verarbeitungszweige, der Betriebsspannung und der Alterung, so daß seine einmalige Erfassung über eine Kalibrationsmessung und eine entsprechende laufende Korrektur keine ausreichenden Verbesserungen ergibt.

Der Erfindung liegt somit die Aufgabe zugrunde, ein Meßverfahren zu schaffen, mittels welchem aus den analogen Empfangssignalen der beiden Wandler offsetfreie und von der Meß- und Verarbeitungseinrichtung weitestgehend unbeeinflußten digitale Triggersignale zur Weiterverarbeitung gewonnen werden können.

Zur Lösung dieser Aufgabe ist bei einem Verfahren der eingangs genannten Art erfindungsgemäß vorgesehen, daß die empfangenen Signale der Wandler in Abhängigkeit vom Periodengang und/oder einem vorbestimmten Pegel einer bestimmten Periode umgeschaltet werden und das jeweils durchgeschleifte Signal einer gemeinsamen Verstärker- und Komparatorschaltung zur Erzeugung eines digitalen Triggersignals für eine nachgeschaltete Zeitmeßeinrichtung zugeführt wird. Durch die Verwendung derselben Verstärker- und Komparatorschaltung für beide Wandlerkanäle wird somit vorteilhaft der störende Einfluß der bisher verwendeten kanaleigenen Schaltungen im Hinblick auf ihre Schwellendrift und ihre systemspezifischen Laufzeiteigenschaften kompensiert, so daß durch diese Baugruppen keine Meßfehler verursacht werden können. Gleichermaßen ist der gemeinsamen Verstärker- und Komparatorschaltung auch nur eine gemeinsame Zeitmeßeinrichtung nachgeschaltet, so daß auch davon herrührende Systemfehler ausgeschlossen sind. Die Wandlersignale werden erfindungsgemäß bezogen auf ihren Periodengang bzw. einen vorbestimmten Pegel einer bestimmten Periode, beispielsweise bei ihrem Nulldurchgang, umgeschaltet, so daß jeweils nur ein Signal zur Verstärker- und Komparatorschaltung durchgeschleift und dort verarbeitet wird. Auf diese Weise können im Hinblick auf den Perioden- oder Pegelgang exakt definierte und durch die Verarbeitung in der gemeinsamen Schaltung gleichermaßen systemspezifisch verarbeitete digitale Triggersignale gewonnen werden. Ein schaltungsspezifischer temperatur- oder driftbedingter Offset der Signale tritt nicht mehr auf.

Die Umschaltung der empfangenen Wandlersignale entsprechend ihrem Perioden- oder Pegelgang kann erfindungsgemäß derart realisiert sein, daß die analogen Signale der Wandler zunächst einem analogen Umschalter zugeführt werden, wobei die Triggerung des Umschalters in Abhängigkeit der Signale erfolgt, und erfindungsgemäß die Triggerung des Umschalters mit dem Signal der vorauseilenden Periode eine Triggerung mit Sprungfunktion sein kann. Der Umschalter schaltet somit innerhalb einer vorgegebenen Zeit von dem einen auf das andere Signal um, wenn das die Umschaltung verursachende Signal den entsprechenden Schaltpegel erreicht hat. Insbesondere im Fall der Triggerung mit Sprungfunktionen muß der Umschalter erfindungsgemäß derart konzipiert sein, daß die vom Umschalten herrührenden Spannungsausgleichsvorgänge des Umschalters derart schnell abklingen, daß zur Erzeugung eines im wesentlichen offsetfreien, der Verstärker- und Komparatorschaltung zuzuführenden Signals die Ausgleichsspannung nach einer von der Periodendauer unabhängigen Abklingzeit nur noch einen zulässigen Meßfehler verursachenden Bruchteil der jeweiligen zu messenden Signalspannung beträgt. Insbesondere bei kleinen Durchflußmengen, bei denen die Laufzeitdifferenz der Wellenpakete nur sehr gering ist, muß der jeweilige Kanal möglichst schnell nach der Signaldetektion abgekoppelt werden, so daß die zum Zeitpunkt der Messung des Signals des nachgeschalteten Wandlers von dem Ausgleichsvorgang herrührende Ausgleichsspannung nur noch einen kleinen Bruchteil ihres Triggerwertes beträgt, so daß der subsumierte Restfehler in dem jeweils neu eingeschalteten Kanal bestimmte Grenzen nicht überschreitet und so am Komparator ein lediglich um diesen im Rahmen des Meßfehlers zulässigen Bruchteil verschobenes Signal erscheint und damit zu einem ebenfalls noch zulässigen minimalen Zeitfehler führt.

Zur Weiterverarbeitung wird erfindungsgemäß das in der Verstärker- und Komparatorschaltung erzeugte digitale Signal abhängig vom Zustand des Signals der Zeitmeßeinrichtung als Start- oder Stoppsignal zum Beginn oder zur Beendigung der Zeitmessung zugeführt wird, wobei das von der vorauseilenden Periode erzeugte Signal als Startsignal verwendet wird, so daß sich so infolge der offsetfreien Qualität der Triggersignale eine exakte und nur mit einem minimalen systemspezifischen Meßfehler behaftete Zeitmessung durchführen läßt, was sich in entsprechend exakt bestimmbaren Durchflußmengen niederschlägt.

Zum Messen eines sehr kleinen oder eines Nulldurchflusses kann in weiterer Ausgestaltung der Erfindung vorgesehen sein, daß bei derartigen Flußmengen zur Ermöglichung des Umschaltens mit ausreichend abgeklungener Ausgleichsspannung und/oder zur Wahrung der Einrichtzeit der Verstärker- und Komparatorschaltung zunächst das Triggersignal des ersten, stromabwärts angeordneten Wandlers aus einer ersten vorauseilenden Periodenwelle als Startsignal abgewartet und das Stoppsignal verzögert und erst mit dem Nulldurchgang einer zweiten oder weiteren Periodenwelle generiert wird. Hierbei erfolgt erfindungsgemäß die Steuerung des Umschalters durch die Flanke des digitalen Ausgangssignals der Verstärker- und Komparatorschaltung, vorzugsweise über eine flankengesteuerte Kippstufe, mittels welcher in Weiterführung des Erfindungsgedankens ebenfalls die Zeitmeßeinrichtung mit der Flanke des digitalen Ausgangssignals der Verstärker- und Komparatorschaltung gestartet bzw. gestoppt wird. Weiterhin wird erfindungsgemäß zur Vermeidung von Schaltfehlern die Verstärker- und Komparatorschaltung für die Dauer des Umschaltens und/oder der Einrichtzeit der Verstärker- und Komparatorschaltung gesperrt.

Um nun vor allem auch bei kleinem oder Nulldurchfluß mit der daraus resultierenden Zeitdifferenz nahe oder gleich Null noch genügend Zeit für die Umschaltung und die zwangsläufig erforderliche Einrichtung von Verstärker und Komparator zu haben, wird das erforderliche Stoppsignal für die Zeitmeßeinrichtung nicht aus dem Nulldurchgang der gleichen Periodenwelle, aus der das Startsignal erzeugt wurde, erzeugt, vielmehr wird zunächst das Triggersignal des ersten Wandlers abgewartet. Da dieser strömungsabwärts angeordnet ist, detektiert er aufgrund der Wellenpaketbeschleunigung den mitgeführten Nulldurchgang als erster. Mit der Digitalflanke des Komparatorausgangs wird dann einerseits die Zeitmessung gestartet, andererseits wird der Umschalter auf den stromaufwärts liegenden Wandler zur Ermittlung des Stoppsignals umgelegt. Gleichzeitig kann der Komparator für die Dauer der Umschalt- und Einrichtezeit deaktiviert werden, um Fehltriggerungen durch vom Umschalten herrührende Umschalttransienten zu verhindern. Hierbei kann erfindungsgemäß die Sperrzeit derart gewählt werden, daß sie größer als die maximale Zeitdifferenz zwischen den beiden Signalen ist, vorzugsweise wird sie größer als die maximale Zeitdifferenz bei Maximaldurchfluß gewählt.

Nach der Wiederfreigabe des Komparators ist also mit Sicherheit das zeitverzögerte Empfangssignal des zweiten Wandlers derselben Periode bereits vorbei, so daß der Komparator frühestens einen um eine oder mehrere Perioden verzögerten späteren Nulldurchgang des Stoppsignals detektieren und entsprechend die Zeitmeßeinrichtung stoppen kann. Beim Durchfluß Null ergibt sich dann nicht eine Zeitdifferenz von Null, sondern von der Dauer der gewählten ganzzahligen Verzögerungs-Periodendauer, so daß sich vorteilhaft bedingt durch den minimalen Zeitversatz keine Schaltschwierigkeiten, die zu Meßfehlern führen könnten, ergeben.

Die vorgewählte ganzzahlige Verzögerungs-Periodendauer ist, da quarzgesteuert, sehr stabil und bekannt. Zusätzlich kann sie in einem Eichmeßzyklus gemessen werden, bei dem die Umschaltung unterdrückt wird, so daß die Periodendauer des Empfangssignals desselben Wandlers gemessen wird. Diese Eichmessung kann jederzeit, also nicht nur bei Nulldurchfluß, rein elektronisch aktiviert werden.

Das erfindungsgemäße Verfahren konnte in der bisherigen Ultraschall-Meßtechnik nicht angewendet werden, da bei den kleinen Durchflüssen die erforderliche Zeitgenauigkeit von beispielsweise 50ps (50 x 10⁻¹²s) bei einem Zeitintervall von rund einer Periodendauer, z.B. 1µs (1 x 10⁻⁶s), zur Einhaltung des maximal zulässigen Meßfehlers eine relative Genauigkeit der Zeitdifferenzmessung von 0,5 x 10⁻⁴ erfordert, was sich mit der seither üblichen analogen Zeitintervall-Meßtechnik nicht erreichen läßt. Mit dem digitalen Zeitintervall-Meßverfahren ist aber der relative Fehler irrelevant, da hier praktisch nur der absolute Auflösungsfehler des digitalen Meßverfahrens dominiert. Daher ist bei einem auflösungsbegrenzten digitalen oder quasi digitalen Zeitintervall-Meßverfahren die für dieses Umschaltverfahren erforderlich Addition einer großen aber bekannte und stabilen Basiszeit, nämlich der Verzögerungszeit, zur eigentlichen Meßzeit akzeptabel, die bei analogen Zeitintervall-Meßverfahren unakzeptabel wäre. Durch den Burst aus vielen Perioden einer quarzgenauen Basisfrequenz mit konstanter Laufzeitverzögerung jeder Periode läßt sich diese feste Basisverzögerung leicht realisieren. Ferner hat diese Verzögerung um ein ganzzahliges Vielfaches der Burstperiode noch einen weiteren Vorteil. Bei den meßtechnisch besonders kritischen kleinen Durchflüssen mit nur minimaler Zeitverzögerung sind die Signale beider Wandler fast deckungsgleich.

Dementsprechend ergibt sich beim Umschaltvorgang nur ein vernachlässigbarer Spannungssprung am Eingang des nachfolgenden gemeinsamen Verstärkers und Komparators. Das hat wiederum zur Folge, daß die unvermeidlichen Einrichtvorgänge nach der Umschaltung infolge des weitestgehenden Abklingens der vom Umschalten herrührenden Ausgleichsvorgänge nur minimale Nachwirkungen haben, was die Meßgenauigkeit gerade in diesem kritischen Meßbereich positiv beeinflußt.

Nach erfolgter Detektion des Stoppsignales, gleichgültig ob der direkte oder der verzögerte Meßmodus verwendet wird, wird erfindungsgemäß der Umschalter zum Empfang eines weiteren Startsignals umgeschaltet, so daß eine kontinuierliche Messung mit einer Vielzahl fortlaufender, eine exakte Festlegung und Fortschreibung des Durchflusses über die Zeit ermöglichender Meßergebnisse durchführbar ist.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine schematische Darstellung der Anordnung der Verfahrenskomponenten,
- Fig. 2: eine Darstellung der Signalverläufe bei Durchfluß, und
- Fig. 3: eine Darstellung des Signalverläufe während der Abklingphase der Ausgleichsvorgänge beim Umschalten.

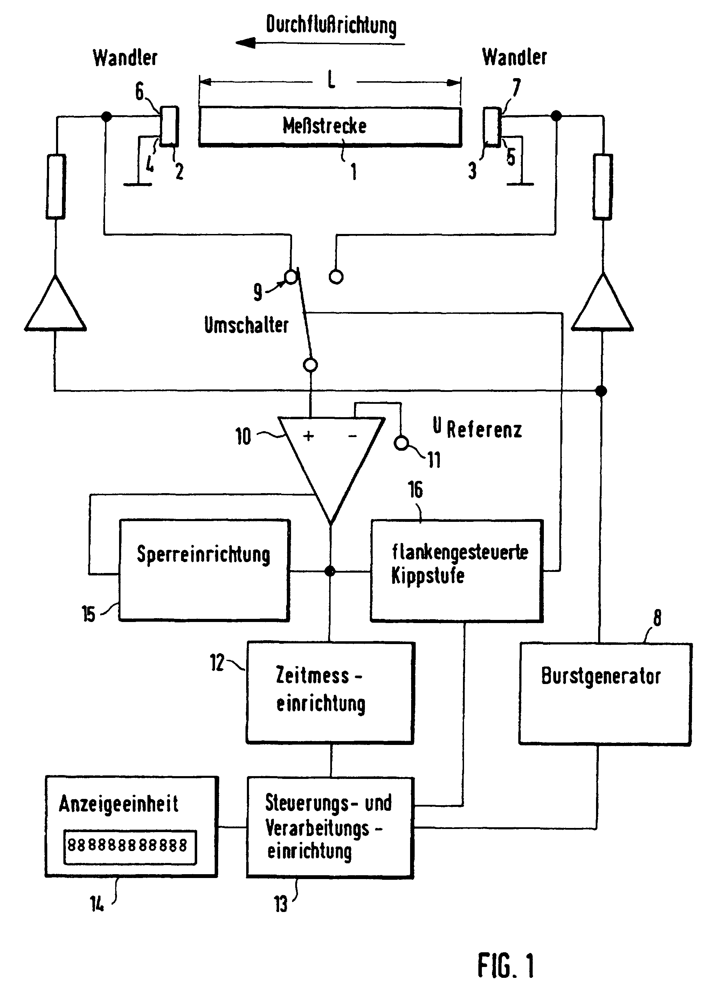

Fig. 1 zeigt eine Meßstrecke 1 der vorbestimmten Länge L, an deren Enden je ein stromabwärts angeordneter Wandler 2 und ein stromaufwärts angeordneter Wandler 3 vorgesehen sind. Beide Wandler liegen mit einem Ausgang 4, 5 auf Erdpotential, der jeweils andere Ausgang 6, 7 ist mit einem die Ultraschallfrequenzpakete erzeugenden Burst-Generator 8 verbunden. Die Ausgänge 6 und 7 der Wandler 2, 3 sind je mit einem Umschalter 9 verbunden, der wiederum mit dem Eingang einer Verstärker- und Komparatorschaltung verbunden ist, von der der Übersicht halber lediglich der Komparator 10 dargestellt ist. Der Umschalter 9 schaltet zwischen den jeweiligen Ausgängen 6, 7 der Wandler 2, 3 um, so daß nur eines der Signale dem Komparator 10 zugeführt wird. Am zweiten Ausgang des Komparators liegt eine Referenzspannung 11 an. Der Ausgang des Komparators 10 ist mit der Zeitmeßeinrichtung 12 verbunden, die ihrerseits mit einer Steuer- und Verarbeitungseinrichtung 13, der ebenfalls zur Verarbeitung der Signale das Ausgangssignal des Burst-Generators 8 zugeführt wird, verbunden. Mittels einer Anzeigeeinheit 14 werden dann die entsprechenden Meßwerte wiedergegeben. Der Aufbau umfaßt ferner eine Sperreinrichtung 15, die zwischen die Zeitmeßeinrichtung 12 und dem Komparator 10 geschaltet ist und die zur Deaktivierung des Komparators 10 dient, wenn insbesondere bei kleinen Durchflüssen die Meßperiode verzögert werden soll. Ferner ist eine flankengesteuerte Kippstufe 16 vorgesehen, die ebenfalls zwischen dem Komparator 10 und die Zeitmeßeinrichtung 12 geschaltet ist und mittels welcher sowohl die Zeitmeßeinrichtung 12 über die Digitalflanke des Komparatorausgangs gestartet bzw. gestoppt wird, als auch der Umschalter 9 entsprechend geschaltet wird.

Das erfindungsgemäße Verfahren arbeitet nun derart, daß mittels des Burst-Generators 8 ein Ultraschall-Burst mit einer Frequenz von ca. 1 MHz ausgesendet wird. Das elektroakustische System bleibt im Sende- und im Empfangsmodus unverändert, womit Reziprozität gewährleistet ist. Mittels der Wandler 6, 7 werden die Ultraschallsignale in das strömende Fluid der Meßstrecke 1 ausgesendet und durchlaufen diese. Abhängig von dem strömenden Medium und seiner Fließgeschwindigkeit werden die Signale beschleunigt oder verzögert, was zur Folge hat, daß entsprechend zeitversetzte Signale an den Wandlern 2, 3 empfangen werden. Da das stromabwärts laufende Signal beschleunigt wird, empfängt der Wandler 2 das Signal als erstes. Bei Detektion des Nullfurchganges der ersten Ultraschallwelle wird dem Umschalter 9 das entsprechende Detektionssignal zugeführt, welches über den Umschalter 9 an den Komparator 10 gegeben wird. Dieser bereitet das analoge Signal in ein digitales Triggersignal auf, das über seinen Ausgang der flankengesteuerten Kippstufe 16 zugeführt wird und über diese als Startsignal an die Zeitmeßeinrichtung 12 gegeben wird. Nach erfolgter Detektion des Startsignals wird über die Digitalflanke des Startsignals über die Kippstufe 16 der Umschalter 9 umgelegt, so daß das zeitversetzt später zu empfangende Ultraschallsignal des Wandlers 7 bei entsprechender Detektion des Nulldurchgangs durchgeschleift und dem Komparator 10, der flankengesteuerten Kippstufe 16 und der Zeitmeßeinrichtung 12 als Stoppsignal zugeführt werden kann. Nach erfolgter Messung der Zeitdifferenz wird das Ergebnis der Steuerungs- und Verarbeitungseinrichtung 13 zugeführt, die das Meßergebnis zur Berechnung der tatsächlichen Durchflußmengen verarbeitet.

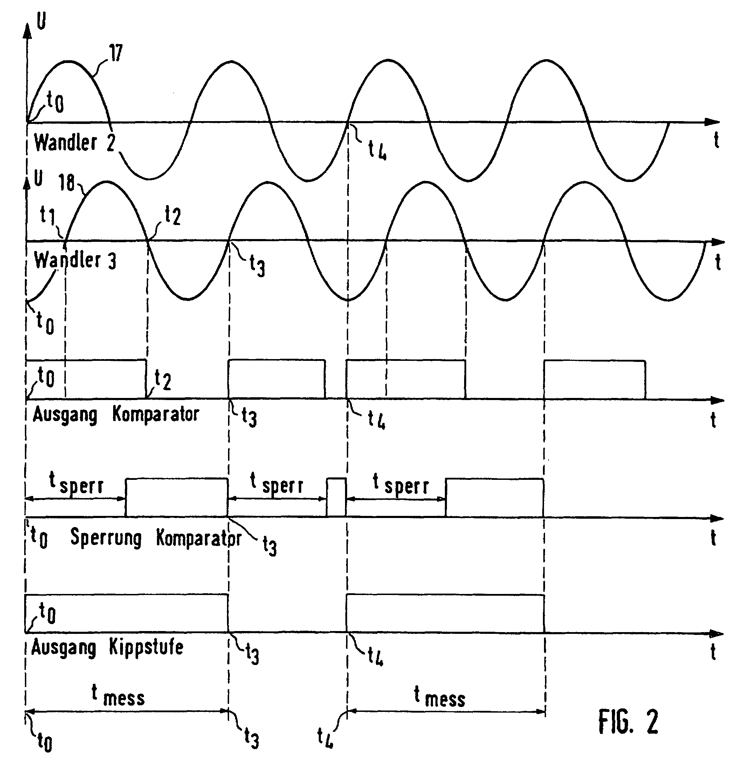

Die einzelnen Signalverläufe und die unterschiedlichen Arbeitsmodi der Einzelkomponenten zeigt Fig. 2. Gezeigt sind in den oberen beiden Kurven die Verläufe der jeweiligen Empfangssignale der Wandler 2 und 3, darunter der zeitliche Arbeitsverlauf des Komparators 10, nachfolgend der zeitliche Öffnungs- und Sperrzustand des Komparators 10, anschließend der Ausgang der Kippstufe 16 und schließlich die eigentliche Meßzeit. Als Abszisse ist jeweils die Zeit aufgetragen, als Ordinate für die ersten beiden Kurven die Signalspannung. Zum Zeitpunkt t₀ durchläuft das Signal 17, das am Wandler 2 detektiert wird, den Nulldurchgang, das am Wandler 3 zu detektierende Empfangssignal 18 ist zeitverzögert und hat seinen Nulldurchgang noch nicht erreicht. Nach Detektion des Nulldurchgangs des Signals 17, der bei der in Fig. 1 gezeigten Schalterstellung des Umschalters 9 dem Komparator 10 zugeführt wird, wird vom Komparator 10 zum Zeitpunkt t₀ ein Startsignal ausgegeben, um die Zeitmeßeinrichtung 12 zu starten. Gleichzeitig beginnt zum Zeitpunkt t₀ die Sperrzeit tₛₚₑᵣᵣ des Komparators 10, die abhängig vom Periodengang und der Frequenz vorbestimmt ist. In dieser Zeit wird der Komparator deaktiviert, damit eine Verzögerung des Empfangs des Nulldurchgangs des Signals 18 ermöglicht wird und nicht der unmittelbare Nulldurchgang derselben Periode (bei t₁) detektiert wird. Nach Ablauf der Sperrzeit tₛₚₑᵣᵣ wird der Komparator wieder freigegeben. Zwar detektiert der Komparator 10 bei t₂ einen Nulldurchgang des Signals 18, dieser wird jedoch nicht von der flankengesteuerten Kippstufe 16 als Stoppsignal erkannt und verwendet. Erst bei t₃, also genau um eine Periode zu t₁ versetzt, detektiert der Wandler 3 wieder einen Nulldurchgang des Signals 18, der dem Komparator 10 zugeführt wird und als Stoppsignal über die flankengesteuerte Kippstufe 16 an die Zeitmeßeinrichtung 12 gegeben wird. Erst mit diesem Stoppsignal wird die Zeitmessung (tₘₑₛₛ)beendet. Gleichzeitig wird der Komparator 10 wieder für die Sperrzeit tₛₚₑᵣᵣ deaktiviert. Ebenfalls zur selben Zeit erfolgt über die Kippstufe 16 die Umschaltung des Umschalters 9. Nach Ablauf der Sperrzeit tₛₚₑᵣᵣ wird der Komparator 10 wieder freigegeben, so daß er zum Zeitpunkt t₄ erneut ein Startsignal erkennt, das zur Zeitmeßeinrichtung 12 durchgeschleift wird. Anschließend beginnt der Ablauf von neuem. Die Meßzeit tₘₑₛₛ läuft somit zwischen dem Zeitintervall t₀ bis t₃ ab und setzt sich aus der tatsächlichen Zeitdifferenz der Signale 17 und 18, nämlich der Differenz zwischen t₀ und t₁ und der zusätzlichen Verzögerungszeit von einer Periodendauer, nämlich zwischen t₁ und t₃ zusammen. Die tatsächliche Zeitdifferenz zwischen den beiden Nulldurchgängen ist der gesuchte Proportionalitätsfaktor zur Strömungsgeschwindigkeit des Mediums.

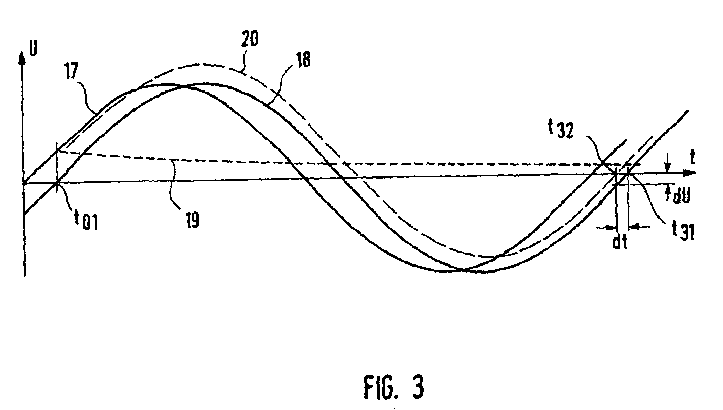

Fig. 3 zeigt nun das Verhalten des Umschalters 9 zur Zeit der Umschaltung von einem Wandler auf den anderen, wobei die Umschaltung hier als Sprungfunktion bei einer vorbestimmten Schaltspannung abläuft. Für den Umschalter wird bei den zu messenden Laufzeitdifferenzen gefordert, daß er durch Wandler 2 getriggert in z. B. einer Periode (1µs (1 x 10⁻⁶s)) vom Wandler 2 auf Wandler 3 umschaltet, um damit die Messung des Nulldurchgangs von Wandler 3 zu ermöglichen. Dabei dürfen die im Schalter auftretenden Ausgleichsvorgänge, nämlich der Sprung von der Signalspannung U_{wandler2} auf U_{wandler3} nach 1µs (1 x 10⁻⁶s) nur noch einen Bruchteil dU von dem dann zu messenden zweiten Signal U_{wandler3} haben, weil am Komparator ein um diesen Bruchteil verschobenes Signal erscheint und damit zu einem Zeitfehler dt führt. Gezeigt sind die beiden versetzten Signale 17 und 18, ferner der Verlauf der abklingenden Ausgleichsspannung 19 und das sich aus der Signalspannung 18 und der Ausgleichsspannung 19 zusammensetzende Signal 20. Zum Zeitpunkt t₀₁ erfolgt die Abkopplung des Wandlers 2 beispielsweise bei einer Signalspannung von 50mV, beide Signale 17, 18 haben beispielsweise eine Spitzenspannung von 150mV. Die dann noch anliegende Ausgleichsspannung erhöht die Signalspannung des am Wandler 3 anliegenden Signals 18 um ihren Betrag, so daß quasi ein stärkeres und verfälschtes Signal gemessen wird. Durch die Signaladdition detektiert der Wandler 3 schließlich nicht den tatsächlichen Nulldurchgang t₃₁ des Signals 18, sondern den Nulldurchgang t₃₂ des Signals 20. Dieser Nulldurchgang ist jedoch mit dem Zeitfehler dt behaftet, der aus der Addition um den vom Ausgleichssignals 19 herrührenden Betrag dU herrührt. Um diesen Zeitmeßfehler dt so niedrig zu halten, daß ein Meßfehler von höchstenfalls 2% auftritt, ist somit ein innerhalb der Meßzeit rasches Abklingen des Signals 19 erforderlich.

## Patentansprüche

1. Verfahren zur Ultraschall-Messung von Durchflußmengen von strömenden Fluiden, bei dem zwei in der Meßstrecke (1) für das strömende Fluid stromauf- und stromabwärts angeordnete kombinierte Sende- und Empfangswandler (2,3) simultan mit einer mittels eines Generators (8), vorzugsweise eines Burst-Generators generierten Ultraschallfrequenz beaufschlagt werden und wechselweise analoge, das Fluid in und gegen die Strömungsrichtung durchlaufende Signale empfangen, anhand welcher die Zeitdifferenz zwischen vorbestimmten Pegeln, insbesondere den Nulldurchgängen einer bestimmten Periode jedes Signals zur Berechnung der Durchflußmenge bestimmt wird, **dadurch gekennzeichnet, daß** die empfangenen Signale (17, 18) der Wandler (2, 3) in Abhängigkeit vom Periodengang und/oder einem vorbestimmten Pegel einer bestimmten Periode umgeschaltet werden und das jeweils durchgeschleifte Signal einer gemeinsamen Verstärker- und Komparatorschaltung (10) zur Erzeugung eines digitalen Triggersignals für eine nachgeschaltete Zeitmeßeinrichtung (12) zugeführt wird.

2. Verfahren nach Anspruch 1, **dadurch gekennzeichnet, daß** die analogen Signale (17, 18) der Wandler (2, 3) zunächst einem analogen Umschalter (9) zugeführt werden, wobei die Triggerung des Umschalters in Abhängigkeit der Signale (17, 18) erfolgt.

3. Verfahren nach Anspruch 2, **dadurch gekennzeichnet, daß** die Triggerung des Umschalters (9) mit dem Signal der vorauseilenden Periode eine Triggerung mit Sprungfunktion ist.

4. Verfahren nach Anspruch 3, **dadurch gekennzeichnet, daß** der Umschalter (9) zur Erzielung eines raschen Abklingens des Umschaltsignals bedämpft ausgebildet ist.

5. Verfahren nach einem der vorangehenden Ansprüche, **dadurch gekennzeichnet, daß** das in der Verstärker- und Komparatorschaltung (10) erzeugte digitale Signal abgängig vom Zustand des Signals (17, 18) der Zeitmesseinrichtung (12) als Start- oder Stoppsignal zum Beginn (t₀) oder zur Beendigung (t₁, t₃) der Zeitmessung zugeführt wird, wobei das von der vorauseilenden Periode erzeugte Signal (17) als Startsignal verwendet wird.

6. Verfahren nach Anspruch 5, **dadurch gekennzeichnet, daß** insbesondere bei kleinem oder Nulldurchfluß zur Ermöglichung des Umschaltens mit ausreichend abgeklungener Ausgleichsspannung und/oder zur Wahrung der Einrichtzeit der Verstärker- und Komparatorschaltung (10) zunächst das Triggersignal des ersten, stromabwärts angeordneten Wandlers (2) aus einer ersten vorauseilenden Periodenwelle als Startsignal (t₀) abgewartet und das Stoppsignal verzögert und erst mit dem Nulldurchgang einer zweiten oder weiteren Periodenwelle (t₃) generiert wird.

7. Verfahren nach Anspruch 6, **dadurch gekennzeichnet, daß** die Steuerung des Umschalters (9) durch die Flanke des digitalen Ausgangssignals der Verstärker- und Komparatorschaltung (10) erfolgt, vorzugsweise über eine flankengesteuerten Kippstufe (16).

8. Verfahren nach Anspruch 6 oder 7, **dadurch gekennzeichnet, daß** mit der Flanke des digitalen Ausgangssignals der Verstärker- und Komparatorschaltung (10) die Zeitmesseinrichtung (12) gestartet und/oder gestoppt wird, vorzugsweise über eine flankengesteuerten Kippstufe (16).

9. Verfahren nach einem der Ansprüche 6 bis 8, **dadurch gekennzeichnet, daß** die Verstärker- und Komparatorschaltung (10) für die Dauer des Umschaltens und/oder der Einrichtzeit der Verstärker- und Komparatorschaltung gesperrt wird (t_{Sperr}).

10. Verfahren nach einem der Ansprüche 6 bis 9, **dadurch gekennzeichnet, daß** die Verzögerungszeit und gegebenenfalls die Sperrzeit (t_{Sperr}) derart gewählt wird, daß sie größer als die maximale Zeitdifferenz zwischen den beiden Signalen ist, vorzugsweise größer als die maximale Zeitdifferenz bei Maximaldurchfluß.

11. Verfahren nach einem der Ansprüche 5 bis 10, **dadurch gekennzeichnet, daß** nach Aufnahme des Stoppsignals der Umschalter (9) zum Empfang eines weiteren Startsignals umgeschaltet wird.

## Claims

1. Method of measuring by ultrasound flow rates of fluids, wherein two combined transmitting and receiving transformers (2, 3), disposed upstream and downstream in the measuring section, are actuated simultaneously with an ultrasound frequency generated by means of a generator (8), preferably a burst generator, and alternately receive analogue signals penetrating the fluid in the direction of flow and in the opposite direction, by means of which signals the time differential between predetermined levels, in particular the zero passes of a certain cycle of each signal, is determined in order to calculate the flow rate, **characterised in that** the received signals (17, 18) of the transformers (2, 3) are switched over as a function of the cycle and/or a predetermined level of a certain cycle and the signal respectively looped through is fed to a common amplifier and comparator circuit (10) in order to generate a digital trigger signal for a downstream timer (12).

2. Method according to claim 1, **characterised in that** the analogue signals (17, 18) of the transformers (2, 3) are first fed to an analogue changeover switch (9), the triggering thereof being effected as a function of the signals (17, 18).

3. Method according to claim 2, **characterised in that** the triggering of the changeover switch (9) with the signal of the previous cycle is a triggering with a skip function.

4. Method according to claim 3, **characterised in that** the changeover switch (9) is damped to achieve rapid decay of the changeover signal.

5. Method according to one of the preceding claims, **characterised in that** the digital signal generated in the amplifier and comparator circuit (10), independently of the state of the signal (17, 18) of the timer (12), is supplied as a start or stop signal at the start (t₀) or finish (t₁, t₃) of the time measurement, in which case the signal (17) generated by the preceding cycle is used as a start signal.

6. Method according to claim 5, **characterised in that** particularly in the case of a low or zero through-flow, in order to permit changeover at a sufficiently decayed compensating voltage and/or in order to keep to the setting-up time of the amplifier and comparator circuit (10), at first the trigger signal of the first, downstream transformer (2) is awaited as a start signal (t₀) from first preceding cycle wave and the stop signal is delayed and not generated until the crossover of a second or further cycle wave (t₃).

7. Method according to claim 6, **characterised in that** the control of the changeover switch (9) is effected by the edge of the digital output signal of the amplifier and comparator circuit (10), preferably via a trigger circuit (16) controlled by the edge.

8. Method according to claim 6 or 7, **characterised in that** with the edge of the digital output signal of the amplifier and comparator circuit (10) the timer (12) is started and/or stopped, preferably via a trigger circuit (16) controlled by the edge.

9. Method according to one of claims 6 to 8, **characterised in that** the amplifier and comparator circuit (10) is locked (t_{Sperr}) for the duration of the changeover and/or the setting-up time of the amplifier and comparator circuit.

10. Method according to one of claims 6 to 9, **characterised in that** the delay time and if necessary the locking time (t_{Sperr}) is so selected that it is longer than the maximum time differential between the two signals, preferably longer than the maximum time differential at maximum through-flow.

11. Method according to one of claims 5 to 10, **characterised in that** after receiving the stop signal, the changeover switch (9) is switched over to receiving a further start signal.

## Revendications

1. Procédé de mesure par ultrasons de débits de fluides en écoulement, selon lequel deux transducteurs d'émission et de réception combinés (2, 3), qui sont disposés en amont et en aval dans le parcours de mesure (1) pour le fluide en écoulement, sont alimentés simultanément avec une fréquence ultrasonore engendrée au moyen d'un générateur (8), de préférence d'un générateur en rafale, et captent alternativement des signaux analogiques se propageant dans le fluide dans et à l'encontre de la direction d'écoulement, à l'aide desquels on détermine pour le calcul du débit, la différence de temps entre des niveaux prédéterminés, notamment les passages par zéro, d'une période déterminée de chaque signal, **caractérisé en ce que** les signaux captés (17, 18) des transducteurs (2, 3) sont inversés en fonction de la périodicité et/ou d'un niveau prédéterminé d'une période déterminée, et le signal respectivement mis en boucle est amené à un circuit commun d'amplificateur et de comparateur (10) pour l'élaboration d'un signal numérique de déclenchement destiné à un dispositif de mesure du temps (12) monté en aval.

2. Procédé selon la revendication 1, **caractérisé en ce que** les signaux analogiques (17, 18) des transducteurs (2, 3) sont tout d'abord amenés à un inverseur analogique (9), le déclenchement de l'inverseur s'effectuant en fonction des signaux (17, 18).

3. Procédé selon la revendication 2, **caractérisé en ce que** le déclenchement de l'inverseur (9) avec le signal de la période en avance de phase est un déclenchement avec une fonction saut.

4. Procédé selon la revendication 3, **caractérisé en ce que** l'inverseur (9) est d'une configuration amortie en vue de l'obtention d'un évanouissement rapide du signal d'inversion.

5. Procédé selon l'une des revendications précédentes, **caractérisé en ce que** le signal numérique produit dans le circuit d'amplificateur et de comparateur (10) est amené, en fonction de l'état du signal (17, 18), au dispositif de mesure du temps (12) en tant que signal de démarrage ou d'arrêt pour débuter (t₀) ou achever (t₁, t₃) la mesure du temps, le signal (17) engendré par la période en avance de phase étant utilisé en tant que signal de démarrage.

6. Procédé selon la revendication 5, **caractérisé en ce que**, notamment dans le cas d'un débit faible ou nul, pour permettre l'inversion avec une tension de compensation suffisamment évanouie et/ou pour garantir le temps de mise en régime du circuit d'amplificateur et de comparateur (10), est tout d'abord attendu en tant que signal de démarrage (t₀), le signal de déclenchement du premier transducteur (2) disposé en aval à partir d'une première onde de période en avance de phase, et le signal d'arrêt est retardé et n'est généré qu'avec le passage par zéro d'une seconde ou autre onde de période (t₃).

7. Procédé selon la revendication 6, **caractérisé en ce que** la commande de l'inverseur (9) est effectuée par le flanc du signal de sortie numérique du circuit d'amplificateur et de comparateur (10), de préférence par l'intermédiaire d'une bascule électronique (16) à commande par flanc.

8. Procédé selon la revendication 6 ou 7, **caractérisé en ce qu'**avec le flanc du signal de sortie numérique du circuit d'amplificateur et de comparateur (10), est produit le démarrage et/ou l'arrêt du dispositif de mesure du temps (12), de préférence par l'intermédiaire d'une bascule électronique (16) à commande par flanc.

9. Procédé selon l'une des revendications 6 à 8, **caractérisé en ce que** (t_{blocage}) le circuit d'amplificateur et de comparateur (10) est bloqué pour la durée de l'inversion et/ou du temps de mise en régime du circuit d'amplificateur et de comparateur.

10. Procédé selon l'une des revendications 6 à 9, **caractérisé en ce que** le temps de retard et, le cas échéant, le temps de blocage (t_{blocage}) est choisi de façon à être supérieur à la différence de temps maximale entre les deux signaux, de préférence supérieur à la différence de temps maximale pour le débit maximal.

11. Procédé selon l'une des revendications 5 à 10, **caractérisé en ce qu'**après enregistrement du signal d'arrêt, l'inverseur (9) est inversé pour la réception d'un autre signal de démarrage.
